# EUROPÄISCHE PATENTSCHRIFT

(11) **EP 0 731 824 B1**
(45) Veröffentlichungstag und Bekanntmachung des Hinweises auf die Patenterteilung: **09.05.2001**
(21) Anmeldenummer: 95932783.4
(22) Anmeldetag: 22.09.1995
(51) Int. Cl.: C08K 5/54, C08K 9/06, C08L 21/00

(54) **VERSTÄRKUNGSADDITIVE**
REINFORCING ADDITIVES
ADDITIFS RENFOR ATEURS

(30) Priorität: 01.10.1994 DE 4435311
(43) Veröffentlichungstag der Anmeldung: 18.09.1996
(73) Patentinhaber: Degussa AG, 40474 Düsseldorf (DE)
(72) Erfinder: DITTRICH, Uwe, D-01445 Radebeul (DE); HUHN, Günter, D-45772 Marl (DE); SREBNY, Hans-Günther, D-48249 Dülmen (DE); MARSCHNER, Katrin, D-01612 Nünchritz (DE)
(86) Internationale Anmeldenummer: EP9503735
(87) Internationale Veröffentlichungsnummer: WO9610604

(56) Entgegenhaltungen:
- DD-A- 298 252
- DD-A- 299 187
- DE-A- 2 747 277
- DE-A- 3 813 678

## Beschreibung

### Technisches Gebiet

Die Erfindung betrifft Verstärkungsadditive aus oligomeren und/oder polymeren schwefelhaltigen Organoorganooxysilanen, gegebenenfalls weiteren, ungesättigte Kohlenwasserstoffe enthaltenden Organoorganooxysilanen, kautschuküblichen verstärkenden halbaktiven, aktiven und/oder hochaktiven Rußen und gegebenenfalls weiteren bekannten Zusätzen sowie die Herstellung und Verwendung der erfindungsgemäßen Additive in vulkanisierbaren, gegebenenfalls silicatisch gefüllten Kautschukmischungen und -massen sowie in Kunststoffmischungen oder in Rußdispersionen.

### Stand der Technik

Die Verwendung von schwefelhaltigen Organosilanen in kieselsäuregefüllten Kautschuken zum Aufbau einer chemischen Bindung zwischen Kautschukknäuel und Kieselsäureoberfläche ist seit langem bekannt.

So werden für diese Anwendungen eine Reihe von Verbindungen in reiner Form vorgeschlagen, beispielsweise 3-Mercapto-propyltrimethoxysilan (US 5 126 501, DE 25 24 863), 3-(Triethoxysilyl)-propylthiocyanat (DE 20 35 778, DE 41 00 217), Bis[3-(triethoxysilyl)propyl]tetrasulfid (DE 22 55 577, DE 24 47 614, DE 33 05 373, JP 6 10 04 742) oder Oligo-[(triethoxysilyl)organo]bis-oligosulfide (DD 299 187, EP 0 466 066).

Von Nachteil bei Anwendung dieser reinen Silane ist entweder die ungenügende Verarbeitungssicherheit durch erhöhte Mischviskositäten sowie stark verkürzte An- und Ausvulkanisationszeiten oder eine ungenügende Verstärkerwirkung durch zu geringe Vernetzungsdichten. Ein weiterer Nachteil ist die schwierige Dosierung der flüssigen Additive und deren Hydrolyseanfälligkeit, die sich speziell bei der Verarbeitung in der Kautschukindustrie negativ auswirkt.

Versuche, die oben angeführten monomeren Silane als Mischungen oder Präparationen mit silicatischen Füllstoffen in der Kautschuk-, Reifen- und Kunststoffindustrie zu verwenden, beispielsweise in DE 25 28 134, DE 33 14 742 und DE 34 37 473 beschrieben, scheiterten an der Hydrolyseanfälligkeit, Instabilität oder zu geringen Wirksamkeit dieser Mischungen.

Eine lagerstabile Silan-Kieselsäure-Präparation auf der Basis von Bis[3-(triethoxysilyl)propyl]tetrasulfid wird in EP 0 442 143 beschrieben. Für die Herstellung dieser nur 5 bis 15 Gew.-Teile Silan enthaltenden Mischung sind aber lange Mischzeiten (> 2 h) und hohe Temperaturen (> 100 °C) erforderlich.

Weiterhin wurden in der Vergangenheit Mischungen aus Bis[3-(triethoxysilyl)-propyl]tetrasulfiden und Rußen und ihre Anwendung in Kautschuken beschrieben. Einfache Mischungen im Gewichtsverhältnis von 50 zu 50, beispielsweise in DE 27 47 277 und US 5 227 425 angeführt, zeigen in kieselsäuregefüllten Kautschukmischungen recht gute verstärkende Effekte, führen aber gleichzeitig zu einer Verschlechterung der Weiterreißfestigkeit der Vulkanisate und einer starken Absenkung der Reißdehnung infolge zu schneller Verstrammung des Kautschuks. Außerdem ist der Silananteil durch Extraktion, beispielsweise mit Diethylether, vollständig vom Ruß ablösbar, was sich auf Stabilität und Wirksamkeit der Silan-Ruß-Mischungen negativ auswirkt.

Silan-Ruß-Präparationen, deren Silananteil nicht durch Extraktion ablösbar ist, werden in den Patentschriften DE 40 43 537 und DE 41 19 959 vorgestellt. Sie sind aufgrund ihres geringen Silangehalts (0,4 bis 5,5 Gew.-Teile) jedoch nur für rein rußgefüllte Kautschukmischungen geeignet und werden nach einem aufwendigen Verfahren (Temperatur > 120°C) hergestellt. Noch aufwendigere Verfahren zum Fixieren des monomeren Silans Bis[3-(triethoxysilyl)propyl]tetrasulfid auf Rußen durch vorgeschaltete Oxidationsprozesse am Ruß (Plasmaverfahren, Oxidationsmittel wie H₂O₂, Salpetersäure, Ozon) werden in JP 88 31796 und DE 38 13 678 beschrieben. Auch hier wird nur ein nicht extrahierbarer Silananteil von 1 bis 5 Gew.-Teilen erreicht.

Alle diese Versuche zur Verbesserung der kautschuktechnologischen Eigenschaften gehen von einer Variation des Rußes oder Behandlung von dessen Oberfläche aus.

### Darstellung der Erfindung

Aufgabe der Erfindung war es, neue, rieselfähige, geruchlose und staubfreie Verstärkungsadditive auf der Grundlage von oligomeren und/oder polymeren schwefelhaltigen Organoorganooxysilanen und in der Kautschuk-, Reifen- und Kunststoffindustrie üblichen verstärkenden halbaktiven, aktiven und/oder hochaktiven Rußen sowie ein einfaches Verfahren zu ihrer Herstellung bereitzustellen.

Eine weitere Aufgabe der Erfindung bestand in der Realisierung der Verwendung der erfindungsgemäßen Additive in vulkanisierbaren, gegebenenfalls silicatisch gefüllten Kautschukmischungen und -massen sowie in Kunststoffmischungen oder auch in Rußdispersionen.

Überraschenderweise wurde gefunden, daß die oben angeführten Nachteile überwunden werden können, wenn die Verstärkungsadditive aus oligomeren und/oder polymeren schwefelhaltigen Organoorganooxysilanen, gegebenenfalls weiteren, ungesättigte Kohlenwasserstoffe enthaltenden Organoorganooxysilanen, kautschuküblichen verstärkenden halbaktiven, aktiven und/oder hochaktiven Rußen und gegebenenfalls weiteren bekannten Zusätzen bestehen.

Gegenstand der Erfindung sind Verstärkungsadditive, bestehend aus
a) 5 bis 70, vorzugsweise 40 bis 60, Gew.-Teilen eines oder mehrerer oligomerer und/oder polymerer schwefelhaltiger Organoorganooxysilane der allgemeinen Formel 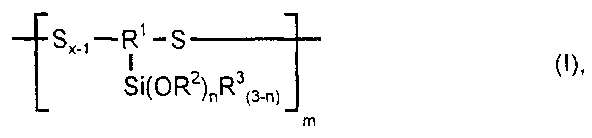 wobei
   R¹ gesättigte und/oder ungesättigte, verzweigte und/oder unverzweigte, substituierte und/oder unsubstituierte, mindestens trivalente Kohlenwasserstoffe mit 2 bis 20 Kohlenstoffatomen, mit der Maßgabe darstellt, daß mindestens zwei Kohlenstoff-Schwefel-Bindungen enthalten sind,
   R² und R³ unabhängig voneinander gesättigte und/oder ungesättigte, verzweigte und/oder unverzweigte, substituierte und/oder unsubstituierte Kohlenwasserstoffe mit 1 bis 20 Kohlenstoffatomen, Halogen, Hydroxy, Wasserstoff sowie Gruppierungen der allgemeinen Formel 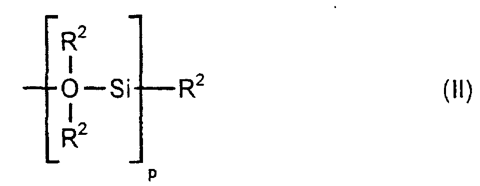 oder

      ―(OR²)_{q}―R² (III),

      wobei R² die oben angegebene Bedeutung hat sowie n = 1 bis 3, m = 1 bis 1000, p = 1 bis 5, q = 1 bis 3 und x = 1 bis 8 betragen, bedeuten,
b) 30 bis 95, vorzugsweise 40 bis 60, Gew.-Teilen eines oder mehrerer der üblichen verstärkenden halbaktiven, aktiven und/oder hochaktiven Ruße, wobei 50 bis 60 Gew.-% des Silananteils am Ruß gebunden sind, und
c) gegebenenfalls weiteren Zusätzen.

Als schwefelhaltige Organoorganooxysilane werden bevorzugt Oligo/Poly-[4-(2-trialkoxysilylethyl)cyclohexan-1,2-diyl]bisöligosulfide der allgemeinen Formel 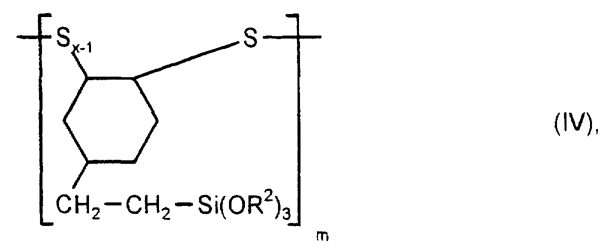 wobei R², m und x die oben angegebene Bedeutung besitzen, eingesetzt.

Darüber hinaus können natürlich eine Reihe weiterer oligomerer und polymerer, schwefelhaltiger Organoorganooxysilane verwendet werden.
Beispiele für solche Verbindungen sind:
- Oligo/Poly-[5-(triethoxysilyl)-bicyclo(2,2,1)heptan-2,3-diyl]bisoligosulfide der allgemeinen Formel 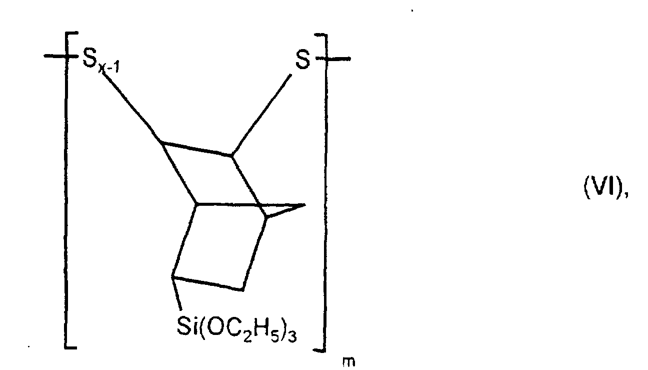
- Oligo/Poly-[8,9-bis(triethoxysilyl)-endo-tricyclo(5,2,1,0^{2,6})decan-3,4-diyl]bisoligosulfide der allgemeinen Formel 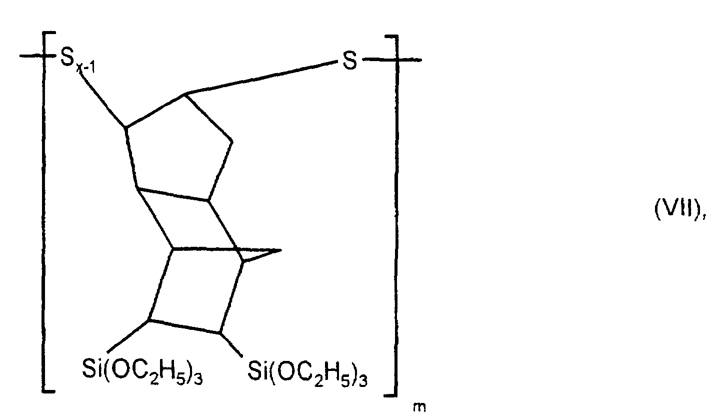
- Oligo/Poly-[(trialkoxysilyl)-alkan-1,2-diyl]bisoligosulfide der allgemeinen Formel 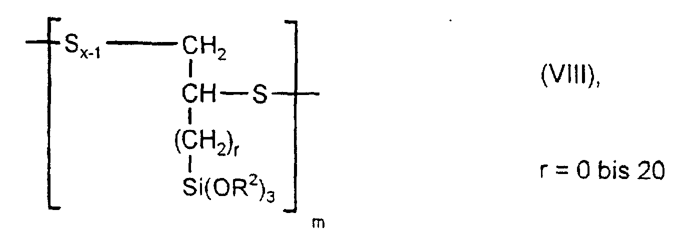
- Oligo/Poly-[1-(trimethoxyethoxysilyl)ethan-1,2-diyl]bisoligosulfide der allgemeinen Formel 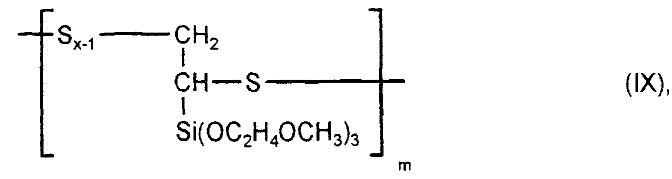
- Oligo/Poly-[3,3,5,5-tetraethoxy-4-oxa-3,5-disilaheptan-1,2,6,7-tetrayl]tetrakisoligosulfide der allgemeinen Formel

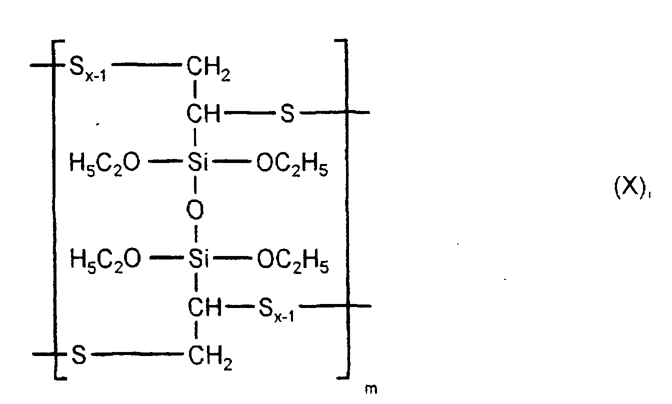

Die Werte für x betragen 1 bis 8, diejenigen für m = 1 bis 200.

Die erfindungsgemäßen Verstärkungsadditive können bis zu 20 Gew.-Teile eines oder mehrerer Organoorganooxysilane der allgemeinen Formel

R⁴-Si(OR²)ₙR³ ₍₃₋ₙ₎ (V),

wobei R², R³ und n die oben angegebene Bedeutung haben und R⁴ ungesättigte, verzweigte und/oder unverzweigte, substituierte und/oder unsubstituierte Kohlenwasserstoffe mit 2 bis 20 Kohlenstoffatomen und mit mindestens einer Doppelbindung olefinischen oder aromatischen Charakters darstellt, enthalten.

Verbindungen der allgemeinen Formel (IV) sind beispielsweise:
- 2-[(3-Cyclohexen-1 -yl)ethyl]trialkoxysilan,
- 2-(Phenyl-ethyl)-trialkoxysilan und/oder
- Alkenyltrialkoxysilane mit bis zu 20 Kohlenstoffatomen in der Alkylengruppe,
wobei Alkoxy = OR² mit R² in der oben angegebenen Bedeutung ist.

Weiterhin können die schwefelhaltigen Organoorganooxysilane der allgemeinen Formel (I) kautschukübliche Zusätze, wie beispielsweise Beschleuniger, Vernetzer und/oder freien Schwefel enthalten. Es ist jedoch auch möglich, diese Zusätze separat zuzumischen.

Neben den üblichen verstärkenden Furnace-Rußen können in den erfindungsgemäßen Silan-Ruß-Mischungen auch Channel-, Thermal-, Flamm-, Acetylen- und/oder Lichtbogen-Ruße sowie Aktivkohlen Verwendung finden.

Für die Anwendung in silicatisch gefüllten Kautschukmischungen bestehen die erfindungsgemäßen Silan-Ruß-Additive vorzugsweise aus 40 bis 60 Gew.-Teilen der beschriebenen Organoorganooxysilane und aus 40 bis 60 Gew.-Teilen kautschuküblichen Rußen.

Gegenstand der Erfindung ist weiterhin ein Verfahren zur Herstellung der oben beschriebenen, erfindungsgemäßen Verstärkungsadditive aus schwefelhaltigen oligomeren und/oder polymeren Silanen und Rußen, welches dadurch charakterisiert ist, daß
a) die oligomeren und/oder polymeren schwefelhaltigen Organoorganooxysilane der allgemeinen Formel (I),
b) die verstärkenden halbaktiven, aktiven und/oder hochaktiven Ruße sowie
c) gegebenenfalls weitere Zusätze
solange in einer üblichen diskontinuierlich oder kontinuierlich arbeitenden Mischeinrichtung bei Raumtemperatur eingemischt werden, bis das Organoorganooxysilan auf dem Ruß adsorbiert ist und ein nicht klebendes Granulat erhalten wird.

Vorteilhafterweise werden die ungesättigte Kohlenwasserstoffe enthaltenden Organoorganooxysilane der allgemeinen Formel (IV), ebenso wir die kautschuküblichen Zusätze oder freier Schwefel, bei Bedarf den schwefelhaltigen Organoorganooxysilanen der allgemeinen Formel (I) vor dem Vermischen mit Ruß zugesetzt.

Dem Fachmann ist bekannt, daß oligomere und polymere Silane oder Siloxane mit Rußen eher klebende bzw. nicht oder nur schwer granulierbare Produkte ergeben. Um so überraschender war es, daß bei der Dosierung der oligomeren und/oder polymeren schwefelhaltigen Organoorganooxysilane zum vorgelegten Ruß nach einer kurzen Adsorptionszeit ein sehr gut verarbeitbares, granulierbares Silan-Ruß-Batch erhalten werden konnte.

Besonders vorteilhafte Eigenschaften der erfindungsgemäßen Silan-Ruß-Verstärkungsadditive werden bei Verwendung der Verbindungen der allgemeinen Formeln (IV) und (VI) bis (IX) erreicht.

Die erfindungsgemäßen Silan-Ruß-Verstärkeradditive werden als feste, rieselfähige, in einer engen Korngrößenverteilung vorliegende, geruchlose, staubfreie und lagerstabile Silan-Ruß-Präparationen erhalten, bei denen die Gewichtsverhältnisse in den Bereichen 5 bis 70 Gew.-Teile Silan und 30 bis 95 Gew.-Teile Ruß frei wählbar sind.

Ein weiterer Gegenstand der Erfindung ist die Verwendung der erfindungsgemäßen Verstärkungsadditive in vulkanisierbaren, das heißt mit Schwefel oder Peroxiden vernetzbaren Kautschukmischungen und -massen, Kunststoffmischungen und Rußdispersionen. Dabei werden besonders silicatisch gefüllte Kautschukmischungen und -massen bevorzugt.

Die erfindungsgemäßen Verstärkungsadditive werden den silicatisch gefüllten Kautschukmischungen in Mengen von 1 bis 100 Teilen, bevorzugt in einer Menge von 2 bis 50 Teilen, bezogen auf 100 Teile Kautschuk, zugesetzt.

Mit den erfindungsgemäßen Additiven gelang es, im Vergleich zu Vulkanisaten, bei denen die oligomeren und/oder polymeren Silane ohne vorheriges Vermischen mit Ruß verwendet wurden, oder im Vergleich zu Vulkanisaten, die herkömmliche, für diesen Verwendungszweck bekannte Silane ohne oder mit Ruß vermischt enthielten, erhebliche Vorteile zu erzielen. So wiesen silicatisch gefüllte Kautschukmischungen, die das erfindungsgemäße Verstärkungsadditiv enthielten, deutlich verbesserte physikalisch-mechanische und dynamische Kennwerte neben einer hohen Verarbeitungssicherheit auf. Unerwarteterweise erhöhte sich die Reißfestigkeit eher tendenziell und Reißdehnung sowie Mischviskosität erreichten keine kritischen Werte.

Zu den für die Anwendung der erfindungsgemäßen Verstärkungsadditive geeigneten Kautschuktypen zählen sowohl die mit Schwefel als auch die mit Peroxiden vernetzbaren, natürlichen oder synthetischen Kautschuke sowie deren Gemische. Als Beispiel seien hier genannt: Styren-Butadien-Kautschuk, Naturkautschuk, EPDM-Kautschuke, Nitrilkautschuk und Polychloropren.

Als helle Verstärkerfüllstoffe können in den Kautschukmischungen alle gegenüber Kautschuk verträglichen und in Kautschukmischungen einarbeitbare, helle, aus Silicaten bestehende und Silicate enthaltende silicatische Füllstoffe, insbesondere natürliche, pyrogene oder gefällte Kieselsäuren und synthetische oder natürlich vorkommende Silicate, eingesetzt werden.

Des weiteren können die mit den erfindungsgemäßen Verstärkungsadditiven versetzten Kautschukmischungen weitere bekannte, kautschukübliche Zuschlagstoffe enthalten, wie z. B.
- Verstärkerruße (oben einzeln benannt),
- inaktive Füllstoffe, wie Calciumcarbonate, Kreiden, Talke oder Metalloxide,
- Vernetzer- und Beschleunigersysteme,
- Vulkanisationsverzögerer,
- Promotoren, wie Zinkoxid oder Stearinsäure,
- Weichmacher, insbesondere aromatische, paraffinische, naphthenische oder synthetische Mineralöle,
- Alterungs-, Lichtschutz-, Ozonschutz-, Ermüdungs-, Färbungs- und Verarbeitungshilfsmittel,
- Schwefel in einer Menge von 0,1 bis 8 Gew.-Teilen je 100 Gew.-Teile Kautschuk.

Die Herstellung der Mischungen erfolgt in der kautschuküblichen Art und Weise in einem Innenmischer und/oder auf einem Walzwerk.

Die erfindungsgemäßen Verstärkungsadditive werden sowohl in Mischungen für die Herstellung von Reifen in Form von Laufflächen-, Seitenwand-, Haft-, Gürtel-, Karkassen- und Wulstringmischungen als auch in Mischungen für technische Artikel, beispielsweise für Schläuche, Dichtungen, Fördergurte, Feder- und Dämpfungselemente oder gummibeschichtete Gewebe eingesetzt.

Bisher bekannte Verstärkungsadditive gestatteten es, nur einen Anteil zwischen 0,5 und 5,5 Gew.-% des eingesetzten Silans fest an bzw. auf dem Ruß zu binden. Der verbleibende Anteil konnte durch Extraktion, beispielsweise mit Ether, aus der Mischung herausgelöst werden. Deshalb war es vollkommen überraschend, daß, obwohl die Herstellung bei 25 °C durchgeführt wurde, aus den erfindungsgemäßen Verstärkungsadditiven 50 bis 60 Gew.-% des Silananteils am Ruß gebunden und nur 40 bis 50 Gew.-% extrahierbar waren.

Die erfindungsgemäßen Verstärkungsadditive sind in ihrer Wirksamkeit vor allem in silicatisch gefüllten Kautschukmischungen den reinen Silanen und kommerziellen Silan-Ruß-Präparaten weit überlegen. Dieser technische Fortschritt wird überraschenderweise durch die Kombination oligomerer und polymerer schwefelhaltiger Organoorganooxysilane mit kautschuküblichen Verstärkerrußen erzielt.

Weitere Vorteile bestehen in der einfachen und ökonomischen Herstellung der erfindungsgemäßen Additive sowie in einer schnellen Dispergier- und Einarbeitbarkeit in die Kautschukmischungen. Infolge des verbesserten Wärmeaufbaus und der ausgezeichneten dynamischen und physikalisch-mechanischen Eigenschaften in kieselsäuregefüllten Reifenvulkanisaten wird eine Anwendung der erfindungsgemäßen Mischungen in sogenannten Öko-Reifen möglich.

Die erfindungsgemäßen Verstärkungsadditive zeigen besonders in vulkanisierbaren, silicatisch gefüllten Kautschuken eine hohe Wirksamkeit. So werden bei Einsatz der erfindungsgemäßen Präparationen in kieselsäuregefüllten Kautschuken, bei hoher Verarbeitungssicherheit, ausgezeichnete physikalisch-mechanische Kennwerte und dynamische Eigenschaften impliziert. Die deutliche Verbesserung von Spannungswerten und Wärmeaufbau erfolgt beispielsweise ohne eine Verschlechterung der Weiterreißfestigkeit oder ein Erreichen von kritischen Grenzen bei Vulkanisationszeiten und Dehnungswerten. Eine solche Kombination von Kautschuk-Eigenschaften ist mit den bisher bekannten Silan-Ruß-Systemen nicht erreichbar.

### Ausführungsbeispiele

### Herstellung der erfindungsgemäßen Mischungen

### Beispiele 1 bis 18

In einem allgemein üblichen 10-I-Scherflügelmischer FM 10 der Firma "Thyssen Henschel" mit hornartigen Fluidisierflügeln als Mischwerkzeug, Kühlmantel und Temperaturmessung wurde jeweils 1 kg des zu verwendenden Rußes oder Rußgemisches vorgelegt und bei Raumtemperatur innerhalb von 10 Minuten unter Stickstoffbeschleierung bei Drehzahlen von 100 bis 200 min⁻¹ die einzusetzenden schwefelhaltigen Organoorganooxysilane über einen Zufluß im Deckel des Mischers hinzugefügt. Daran schloß sich eine Adsorptionszeit von 8 bis 10 Minuten bei einer Drehzahl < 50 min⁻¹ an. Zur Einstellung einer engen Korngrößenverteilung im entstandenen Granulat wurde in kurzen Intervallen (3 bis 5 x 20 Sekunden) bei einer Drehzahl von 500 min⁻¹ Scherenergie eingebracht. Während des gesamten Prozesses wurde die durch Adsorption des schwefelhaltigen Organoorganooxysilans auf den Rußen und die durch eingebrachte Scherenergie entstehende Wärme über den Kühlmantel abgeführt. Nach einer Gesamtverweilzeit von 20 bis 30 Minuten erfolgte die Entleerung des Mischgeräts, und die Silan-Ruß-Verstärkungsadditive wurden als rieselfähige, geruchlose, klebfreie und nicht staubende Granulate mit enger Korngrößenverteilung erhalten.

### Verwendete schwefelhaltige oligomere und polymere Organosilane waren:

- A: Oligo/Poly-[4-(2-triethoxysilylethyl)cyclohexan-1,2-diyl]bisoligosulfide der allgemeinen Formel 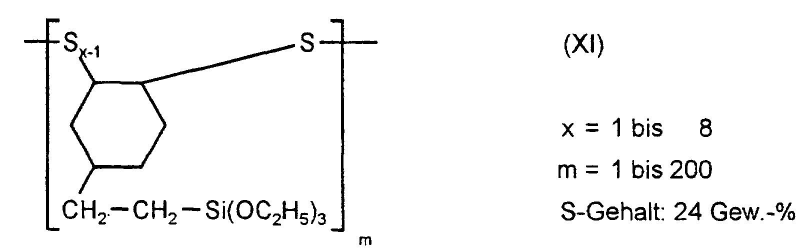
- B: Oligo/Poly-[8,9-bis(triethoxysilyl)-endo-tricyclo(5,2,1,0^{2,6})-decan-3,4-diyl]bisoligosulfide der allgemeinen Formel 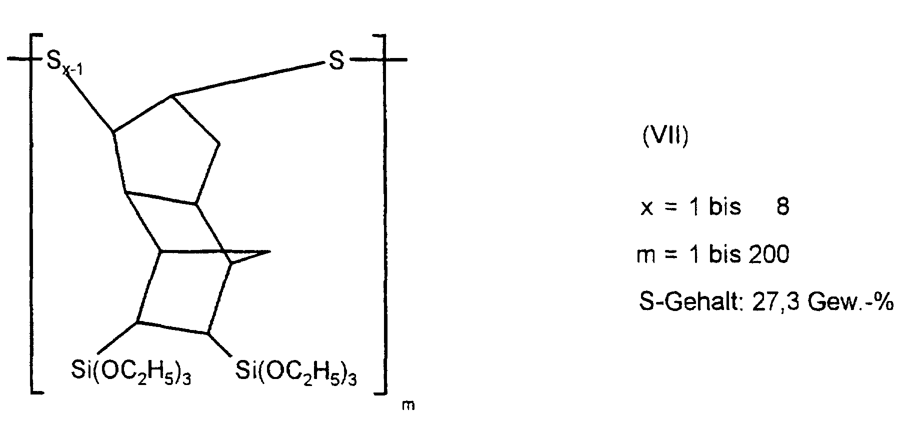
- C: Oligo/Poly-[5-(triethoxysilyl)-bicyclo(2,2,1)heptan-2,3-diyl]bisoligosulfide der allgemeinen Formel 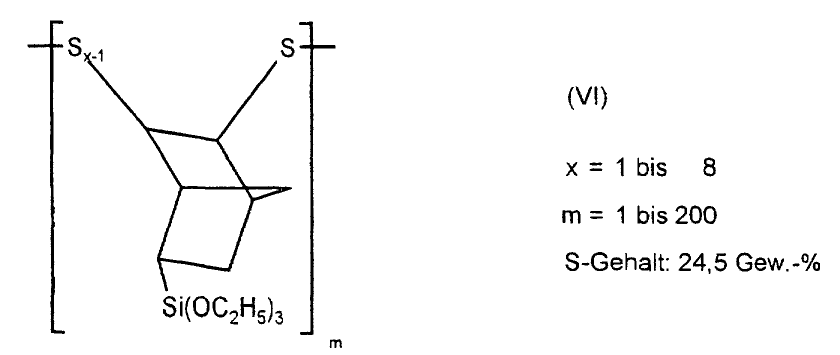
- D: Oligo/Poly-[1-(trimethoxyethoxysilyl)ethan-1,2-diyl]bisoligosulfide der allgemeinen Formel 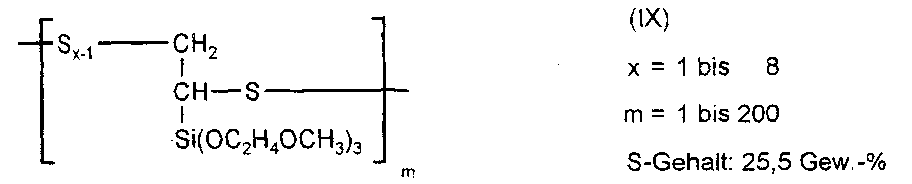
- E: Oligo/Poly-[3,3,5,5-tetraethoxy-4-oxa-3,5-disilaheptan-1,2,6,7-tetrayl]tetrakisoligosulfide der allgemeinen Formel

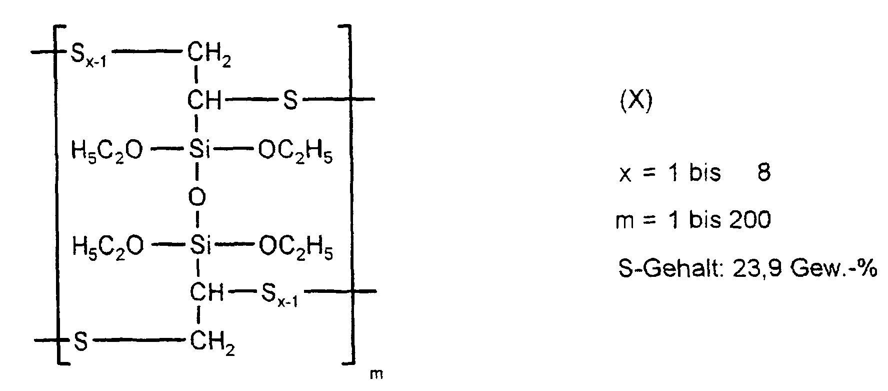

Verwendete Ruße waren:

| | Typ | Hersteller |
|---|---|---|
| F | Statex N 330 | Columbian Carbon Deutschland GmbH |
| G | Corax N 110 | Degussa AG |
| H | Corax N 220 | Degussa AG |
| I | Corax N 330 | Degussa AG |
| K | Elftex 285 (N 550) | Cabot Europa Ltd. |
| L | Elftex 465 (N 330) | Cabot Europa Ltd. |

Verwendete Zusätze zum schwefelhaltigen Organoorganooxysilan waren:

| | |
|---|---|
| M | Schwefel (gelöst) |
| N | 2-[(3-Cyclohexen-1-yl)ethyl]triethoxysilan |
| O | 2-(Phenyl-ethyl)-triethoxysilan |
| P | Tetramethylthiuramdisulfid |

Ausgangsstoffe, Parameter zum Mischvorgang und Angaben zu den erhaltenen Ergebnisse der Ausführungsbeispiele 1 bis 18 sind in Tabelle 1 dargelegt.

**Tabelle 1**

| Bsp. Nr. | Ausgangsstoffe | | | | | | Mischungsherstellung | | Präparationen | | |
|---|---|---|---|---|---|---|---|---|---|---|---|
| | Silan | Zusatzstoff | | Silan + Zusatz | Ruß | | Temp. | VWZ | Schüttdichte | Korngrößenverteilung | |
| | Nr. | Nr. | Gew.-% | kg | Nr. | kg | °C | min | g/cm³ | Gew.-% | mm |
| 1 | A | - | - | 1 | F | 1 | 25 | 20 | 0,37 | 90 | 0,2-1,0 |
| | | | | | | | | | | 9 | 1,0-2,0 |
| 2 | A | - | - | 1,4 | F | 0,6 | 25 | 20 | 0,41 | 90 | 0,5-1,4 |
| | | | | | | | | | | 9 | 1,4-2,0 |
| 3 | A | - | - | 1 | K | 1 | 25 | 25 | 0,20 | 90 | 1,5-2,5 |
| | | | | | | | | | | 9 | 2,5-3,5 |
| 4 | A | - | - | 1 | L | 1 | 25 | 22 | 0,16 | 90 | 0,5-1,4 |
| | | | | | | | | | | 9 | 1,4-2,0 |
| 5 | A | - | - | 1 | F | 0,5 | 25 | 22 | 0,31 | 90 | 0,4-1,3 |
| | | | | | L | 0,5 | | | | 8 | 1,3-2,0 |
| 6 | A | - | - | 1 | F | 0,5 | 25 | 22 | 0,33 | 90 | 0,4-1,4 |
| | | | | | K | 0,5 | | | | 8 | 1,4-2,0 |
| 7 | A | - | - | 1 | 1 | 1 | 25 | 25 | 0,54 | 90 | 0,5-1,5 |
| | | | | | | | | | | 8 | 1,5-2,0 |
| 8 | A | - | - | 1 | H | 1 | 25- | 25 | 0,58 | 90 | 1,0-2,0 |
| | | | | | | | 30 | | | 7 | 2,0-2,5 |
| 9 | A | - | - | 0,7 | I | 1,3 | 25 | 22 | 0,47 | 90 | 0,5-1,4 |
| | | | | | | | | | | 9 | 1,5-2,0 |
| 10 | A | - | - | 0,1 | G | 1,9 | 25 | 20 | 0,35 | 90 | 0,1-0,8 |
| | | | | | | | | | | 7 | 0,8-2,0 |
| 11 | A | M | 2 | 1 | F | 1 | 25 | 20 | 0,37 | 90 | 0,2-1,0 |
| | | | | | | | | | | 8 | 1,0-2,0 |
| 12 | A | N | 5 | 1 | F | 1 | 25 | 20 | 0,37 | 90 | 0,2-1,0 |
| | | | | | | | | | | 8 | 1,0-2,0 |
| 13 | A | O | 10 | 1 | L | 1 | 25 | 22 | 0,17 | 90 | 0,5-1,4 |
| | | | | | | | | | | 8 | 1,4-2,0 |
| 14 | A | P | 10 | 1 | F | 1 | 25 | 20 | 0,36 | 90 | 0,2-1,0 |
| | | | | | | | | | | 7 | 1,0-2,0 |
| 15 | B | - | - | 1 | F | 1 | 25 | 20 | 0,37 | 90 | 0,5-1,5 |
| | | | | | | | | | | 8 | 1,5-2,2 |
| 16 | C | - | - | 1 | F | 1 | 25 | 20 | 0,37 | 90 | 0,1-1,0 |
| | | | | | | | | | | 8 | 1,0-2,0 |
| 17 | D | - | - | 1 | F | 1 | 25 | 22 | 0,37 | 90 | 0,2-1,1 |
| | | | | | | | | | | 8 | 1,1-2,0 |
| 18 | E | - | - | 1 | F | 1 | 25 | 22 | 0,37 | 90 | 0,3-1,2 |
| | | | | | | | | | | 9 | 1,2-2,1 |

Die hergestellten Silan-Ruß-Präparationen wurden als Verstärkungsadditive in kieselsäuregefüllten Styren-Butadien-Kautschukmischungen in der angegebenen Zusammensetzung (Angaben der Mengen in Gewichtsteilen) auf ihre Wirksamkeit getestet
- jeweils gegen eine O-Mischung, ohne Zusatz von Silan-Ruß-Mischungen,
- gegen Vergleichsmischungen, die das verwendete Silan in reiner Form enthielten,
- gegen Kautschukmischungen, denen kommerziell verfügbare Ruß-Silan-Präparate hinzugefügt wurden.

Die Herstellung der Vulkanisate erfolgte in einer in der Gummiindustrie üblichen zweistufigen Verfahrensweise. Die Grundmischung wurde in einem Innenmischer hergestellt und unter Zugabe der Vernetzungschemikalien auf einem Walzwerk fertig gemischt. Von diesen Kautschukmischungen wurden in der üblichen Weise Prüfkörper durch Vulkanisation hergestellt.

Rohstoffe bei der Vulkanisatherstellung waren:

| | |
|---|---|
| Buna Hüls EM 1502 | SBR |
| Buna Hüls EM 1712 | SBR ölgestreckt (37,5 Teile aromatisches Mineralöl) |
| Ultrasil VN3 | gefällte Kieselsäure |
| Circosol 4240 | paraffinisches Mineralöl |
| Q8 Purcell 900 P | paraffinisches Mineralöl |
| Lipoxol 4000 | Polyethylenglykol |
| Vulkanox HS (TMQ) | 2,2,4-Trimethyl-1,2-dihydrochinolin |
| Vulkanox 4010 NA (IPPD) | N-Isopropyl-N'-phenyl-p-phenylendiamin |
| Vulkanox 4020 (6 PPD) | N-1,3-Dimethylbutyl-N'-phenyl-p-phenylendiamin |
| Vulkacit CZ (CBS) | Benzothiazyl-2-cyclohexylsulfenamid |
| Vulkacit D (DPG) | Diphenylguanidin |
| Vulkacit NZ (TBBS) | Benzothiazyl-2-tert.-butylsulfenamid |

Prüfnormen für die anwendungstechnische Untersuchung waren:

| | |
|---|---|
| Mooney-Viskosität ML (1+4) | DIN 53 523 Teil 1 - 3 |
| t₁₀, t₉₀ | DIN 53 523 Teil 4 |
| Zugfestigkeit, Reißdehnung, Spannungswert (Modul), 100 %, 200 %, 300 % (Stab und Ring) | DIN 53 504 |
| bleibende Dehnung | DIN 53 518 |
| Härte (Shore-A) | DIN 53 505 |
| Weiterreißwiderstand | DIN 53 507 |
| Rückprallelastizität | DIN 53 512 |
| Compression Set | DIN 53 517 |
| Abrieb | DIN 53 516 |
| Goodrich Flexometer | DIN 53 533 Teil 3 |

### Kugelzermürbung nach Martens

### Rezeptur I

### SBR (Styren-Butadien-Kautschuk)

Vergleich von 4 Kautschukmischungen mit unterschiedlichen Mengen der erfindungsgemäßen Verstärkungsadditive nach Beispiel 1 mit der entsprechenden O-Mischung ohne Verstärkungsadditiv.

**Tabelle 2**

| Mischung Nr. | 001 | 002 | 003 | 004 | 005 |
|---|---|---|---|---|---|
| Buna Hüls EM 1502 | 100 | 100 | 100 | 100 | 100 |
| Ultrasil VN3 | 60 | 60 | 60 | 60 | 60 |
| Circosol 4240 | 7,5 | 7,5 | 7,5 | 7,5 | 7,5 |
| Zinkoxid RS | 5 | 5 | 5 | 5 | 5 |
| Lipoxol 4000 | 2 | 2 | 2 | 2 | 2 |
| Vulkanox HS | 1 | 1 | 1 | 1 | 1 |
| Stearinsäure | 1,5 | 1,5 | 1,5 | 1,5 | 1,5 |
| Schwefel | 1,6 | 1,6 | 1,6 | 1,6 | 1,6 |
| Vulkacit NZ | 1,6 | 1,6 | 1,6 | 1,6 | 1,6 |
| Vulkacit D | 0,8 | 0,8 | 0,8 | 0,8 | 0,8 |
| erfindungsgem. Additiv entspr. Beispiel 1 | - | 3,0 | 6,0 | 9,0 | 12,0 |
| Summe | 181 | 184 | 187 | 190 | 193 |

### Vulkanisateigenschaften der Mischungen nach Rezeptur I

**Tabelle 3**

| Mischung Nr. | 001 | 002 | 003 | 004 | 005 |
|---|---|---|---|---|---|
| Mooney-Viskosität ML (1+4) 100 °C | 81 | 77 | 81 | 82 | 82 |
| Vulkameter 160 °C | | | | | |
| t₁₀ (min) | 12,6 | 9,6 | 8,2 | 7,1 | 6,3 |
| t₉₀ (min) | 19,1 | 16,6 | 14,8 | 13,5 | 12,8 |
| T₉₀-t₁₀ (min) | 5,5 | 7,0 | 6,6 | 6,4 | 6,5 |
| Vulkanisation 30 min 160 °C Härte (Shore-A) | 67 | 67 | 73 | 74 | 76 |
| Zugfestigkeit (MPa) | 9,0 | 14,8 | 22,6 | 26,5 | 25,8 |
| Modul 100 % (MPa) | 1,3 | 1,8 | 2,5 | 3,3 | 3,5 |
| Modul 200 % (MPa) | 1,9 | 3,4 | 5,5 | 7,7 | 8,9 |
| Modul 300 % (MPa) | 2,7 | 5,9 | 10,3 | 14,0 | 15,7 |
| Reißdehnung (%) | 672 | 612 | 488 | 471 | 417 |
| Weiterreißfestigkeit (N/mm) | 16 | 20 | 18 | 17 | 16 |
| Rückprallelastizität (%) | 43 | 43 | 44 | 44 | 43 |
| Compression Set 72 h 70 °C (%) | 29 | 30 | 24 | 22 | 22 |
| Abrieb (mm³) | 278 | 162 | 145 | 127 | 119 |
| Goodrich-Flexometer, Methode 1 ΔT nach 25 min (°C) | 53 | 35 | 39 | 40 | 41 |
| Fließen nach 25 min (%) | -10,5 | -3,0 | -2,4 | -2,0 | -1,5 |
| bl. Verformung (%) | 12,7 | 5,2 | 6,0 | 4,8 | 4,1 |

Durch Einsatz der erfindungsgemäßen Verstärkungsadditive wurde mit deren steigendem Anteil die Anvulkanisationszeit verkürzt, wobei diese nicht unter kritische Größenordnungen sank. Unerwarteterweise blieb die Mooney-Viskosität nahezu konstant, und die Vulkanisationszeit stieg geringfügig.

Die physikalisch-mechanischen und dynamischen Kennwerte der erhaltenen Vulkanisate zeigten in Gegenwart der erfindungsgemäßen Präparationen Verbesserungen in Größenordnungen. Besonders interessant war, daß trotz deutlich positiver Entwicklung von Zugfestigkeit, Moduli, Härte, Compression Set, Abrieb und Flexometer-Werten sich die Weiterreißfestigkeit ebenfalls positiv darstellte und die Rückprallelastizität praktisch unbeeinflußt blieb.

### Rezeptur II

### SBR-Reifenmischung

Vergleich von 6 typischen Kautschukmischungen für Pkw-Reifen mit unterschiedlich zusammengesetzten, erfindungsgemäßen Verstärkungsadditiven (Beispiele 1, 4 und 7) mit der entsprechenden O-Mischung ohne Verstärkungsadditiv. Variiert wurden dabei die Rußtypen und die Mengen der erfindungsgemäßen Additive, bezogen auf den Kautschuk- und Füllstoffanteil.

**Tabelle 4**

| Mischung Nr. | 006 | 007 | 008 | 009 | 010 | 011 | 012 |
|---|---|---|---|---|---|---|---|
| Buna Hüls EM 1712 | 137,5 | 137,5 | 137,5 | 137,5 | 137,5 | 137,5 | 137,5 |
| Ultrasil VN3 | 75 | 75 | 75 | 75 | 75 | 75 | 75 |
| Q8 Purcell 900 P | - | 2,5 | 5 | 2,5 | 5 | 2,5 | 5 |
| Zinkoxid RS | 5 | 5 | 5 | 5 | 5 | 5 | 5 |
| Stearinsäure | 1,5 | 1,5 | 1,5 | 1,5 | 1,5 | 1,5 | 1,5 |
| Koresin-Harz | 2 | 2 | 2 | 2 | 2 | 2 | 2 |
| Vulkanox 4010 NA | 1 | 1 | 1 | 1 | 1 | 1 | 1 |
| Vulkanox 4020 | 1 | 1 | 1 | 1 | 1 | 1 | 1 |
| Schwefel | 1,6 | 1,6 | 1,6 | 1,6 | 1,6 | 1,6 | 1,6 |
| Vulkacit NZ | 1,6 | 1,6 | 1,6 | 1,6 | 1,6 | 1,6 | 1,6 |
| Vulkacit D | 1,2 | 1,2 | 1,2 | 1,2 | 1,2 | 1,2 | 1,2 |
| erfindungsgemäßes Additiv entsprechend | | | | | | | |
| Herstellungsbsp. 1 | - | 6 | 12 | - | - | - | - |
| Herstellungsbsp. 4 | - | - | - | 6 | 12 | - | - |
| Herstellungsbsp. 7 | - | - | - | - | - | 6 | 12 |
| Summe | 227,4 | 235,9 | 244,4 | 235,9 | 244,4 | 235,9 | 244,4 |

### Vulkanisateigenschaften der Mischungen nach Rezeptur II

**Tabelle 5**

| Mischung Nr. | 006 | 007 | 008 | 009 | 010 | 011 | 012 |
|---|---|---|---|---|---|---|---|
| Mooney-Viskosität ML (1+4) 100 °C | 87 | 73 | 64 | 75 | 71 | 72 | 68 |
| Vulkameter 160 °C | | | | | | | |
| t₁₀ (min) | 1,2 | 8,1 | 7,3 | 8,1 | 6,6 | 8,6 | 7,0 |
| t₉₀ (min) | 44,2 | 26,0 | 19,1 | 23,9 | 17,9 | 24,0 | 18,2 |
| t₉₀-t₁₀ (min) | 43 | 17,9 | 11,8 | 15,8 | 11,3 | 15,4 | 11,2 |
| Vulkanisation 30 min 160 °C Härte (Shore-A) | 48 | 56 | 60 | 55 | 61 | 54 | 61 |
| Zugfestigkeit (MPa) | 5,3 | 13,2 | 15,7 | 13,7 | 17,0 | 12,9 | 17,0 |
| Modul 100 % (MPa) | 0,6 | 1,0 | 1,4 | 1,0 | 1,65 | 1,0 | 1,6 |
| Modul 200 % (MPa) | 0,8 | 2,0 | 3,3 | 2,1 | 3,8 | 2,0 | 3,8 |
| Modul 300 % (MPa) | 1,2 | 3,6 | 6,03 | 3,80 | 7,0 | 3,5 | 6,8 |
| Reißdehnung (%) | 1054 | 756 | 633 | 747 | 611 | 747 | 626 |
| Weiterreißfestigkeit (N/mm) | 19 | 25 | 23 | 24 | 20 | 27 | 20 |
| Rückprallelastizität (%) | 39 | 39 | 38 | 40 | 39 | 40 | 39 |
| Abrieb (mm³) | (*) | 275 | 226 | 281 | 173 | 264 | 157 |
| Goodrich-Flexometer Methode 1 ΔT nach 25 min (%) | (*1) | 41 | 31 | 41 | 29 | 41 | 29 |
| Fließen nach 25 min (%) | (*1) | -5,9 | -1,1 | -6,0 | -0,8 | -5,5 | -1,0 |
| bl. Verformung (%) | (*1) | 8,7 | 3,1 | 8,7 | 2,4 | 8,7 | 2,4 |
| Kugelzermürbung nach Martens | | | | | | | |
| 150 N (°C) | 120 | 142 | 111 | 138 | 103 | 139 | 105 |
| 200 N (°C) | 5 | 13 | 157 | 203 | 145 | 14,8 | 147 |
| | (*2) | (*2) | | | | (*2) | |
| 250 N (°C) | - | - | 186 | - | 178 | - | 181 |
| 300 N (°C) | - | - | 3 | - | 3 | - | 3 (^{*}2) |
| | | | (*2) | | (*2) | | |

| | | | | | | | |
|---|---|---|---|---|---|---|---|
| (*) nicht meßbar, Probe zu weich | | | | | | | |
| (*1) nicht meßbar, Verformung zu hoch | | | | | | | |
| (*2) Zerstörung de Probe | | | | | | | |

Die erfindungsgemäßen Verstärkungsadditive bewirkten in den Reifenmischungen eine deutliche Verbesserung nahezu aller physikalisch-mechanischen und dynamischen Parameter. Trotz des hohen Verstärkereffekts durch die erfindungsgemäßen Präparationen sanken die An- und Ausvulkanisationszeiten sowie die Reißdehnung nicht unter kritische Größenordnungen.

Überraschenderweise fiel die Weiterreißfestigkeit auch nicht, wie sonst üblich, bei höherer Dosierung der Verstärkungspräparation unter den Wert der Nullmischung ab.

Aufgrund des deutlich verbesserten Wärmeaufbaus (Kugelzermürbung) und der durch den Gehalt an Kieselsäure bedingten verringerten Oberflächenspannung der erhaltenen Kautschukproben eignen sich Rezepturen dieser Art auch für die Entwicklung von Öko-Reifen.

### Rezeptur III

### SBR-Testmischung

Vergleich von Kautschukmischungen ohne Silananteil, mit freiem Silan und mit dem erfindungsgemäßen Verstärkungsadditiv.

**Tabelle 6**

| Mischung Nr. | 013 | 014 | 015 |
|---|---|---|---|
| Buna Hüls EM 1502 | 100 | 100 | 100 |
| Zinkoxid RS | 5 | 5 | 5 |
| Stearinsäure | 2 | 2 | 2 |
| Ultrasil VN3 | 50 | 50 | 50 |
| Diethylenglykol | 3 | 3 | 3 |
| Vulkacit CZ | 1,2 | 1,2 | 1,2 |
| Vulkacit D | 1,0 | 1,0 | 1,0 |
| Schwefel | 2,0 | 2,0 | 2,0 |
| Oligo-[4-(2-triethoxysilylethyl)-cyclohexan-1,2-diyl]bisoligosulfid (S-Gehalt: 24 %) | - | 2 | - |
| erfindungsgemäßes Additiv entsprechend Beispiel 1 | - | - | 4 |
| Summe | 164,2 | 165,2 | 168,2 |

### Vulkanisateigenschaften der Mischungen nach Rezeptur III

**Tabelle 7**

| Mischung Nr. | 013 | 014 | 015 |
|---|---|---|---|
| Mooney-Viskosität ML (1+4) 100 °C | 81 | 75 | 79 |
| Vulkameter 150 °C | | | |
| t₁₀ (min) | 19,3 | 14,8 | 15,2 |
| t₉₀ (min) | 27,0 | 23,4 | 24,6 |
| t₉₀-t₁₀ (min) | 7,7 | 8,6 | 9,4 |
| Vulkanisation 35 min 150 °C Härte (Shore-A) | 65 | 71 | 73 |
| Zugfestigkeit (MPa) | 12,4 | 13,7 | 13,9 |
| Modul 300 % (MPa) | 3,7 | 7,2 | 9,8 |
| Reißdehnung (%) | 611 | 465 | 413 |
| bl. Dehnung (%) | 30 | 17 | 15 |
| Rückprallelastizität (%) | 43 | 44 | 45 |
| Abrieb (mm³) | 156 | 92 | 82 |
| Goodrich-Flexometer, Methode 1, ΔT nach 25 min (°C) | 38 | 26 | 24 |
| Fließen nach 25 min (%) | -1,04 | 0,06 | 0,334 |
| bl. Verformung (%) | -4,2 | 0,2 | 1,3 |

Beim Vergleich der Kennwerte des Vulkanisats unter Verwendung des erfindungsgemäßen Verstärkungsadditivs mit dem Vulkanisat, welches das korrespondierende reine Silan enthielt, zeigte sich die deutliche Überlegenheit der erfindungsgemäßen Silan-Ruß-Präparation. Alle geprüften Vulkanisateigenschaften mit der naturgemäßen Ausnahme der Reißdehnung wurden bei Einsatz der erfindungsgemäßen Silan-Ruß-Mischung gegenüber dem reinen Silan deutlich verbessert.

### Rezeptur IV

### SBR

Vergleich von Kautschukmischungen ohne Silananteil mit der erfindungsgemäßen Silan-Ruß-Präparation nach Beispiel 7 und einer Silan-Ruß-Präparation, hergestellt (nach DE 27 47 277) aus dem Ruß Corax N 330 und dem kommerziell verfügbaren, monomeren, schwefelhaltigen Silan Bis[3-triethoxysilylpropyl]tetrasulfid (Si 69 von der Degussa AG, Frankfurt) im Massenverhältnis 50 : 50.

**Tabelle 8**

| Mischung Nr. | 016 | 017 | 018 |
|---|---|---|---|
| Buna Hüls EM 1502 | 100 | 100 | 100 |
| Ultrasil VN3 | 60 | 60 | 60 |
| Circosol 4240 | 7,5 | 7,5 | 7,5 |
| Zinkoxid RS | 5 | 5 | 5 |
| Lipoxol 4000 | 2 | 2 | 2 |
| Vulkanox HS | 1 | 1 | 1 |
| Stearinsäure | 1,5 | 1,5 | 1,5 |
| Schwefel | 1,6 | 1,6 | 1,6 |
| Vulkacit NZ | 1,6 | 1,6 | 1,6 |
| Vulkacit D | 0,8 | 0,8 | 0,8 |
| Ruß-Silan-Präparation aus Corax N 330 und Bis[3-triethoxysilylpropyl]tetrasulfid im Massenverhältnis 50 : 50 erfindungsgemäßes Silan-Ruß-Batch entsprechend | - | 9,0 - | - |
| Herstellungsbeispiel 7 | - | - | 9,0 |
| Summe | 181 | 190 | 190 |

### Vulkanisateigenschaften der Mischungen nach Rezeptur IV

**Tabelle 9**

| Mischung Nr. | 016 | 017 | 018 |
|---|---|---|---|
| Mooney-Viskosität ML (1+4) 100 °C | 81 | 80 | 82 |
| Vulkameter 160 °C | | | |
| t₁₀ (min) | 12,9 | 7,2 | 7,3 |
| t₉₀ (min) | 19,1 | 13,8 | 14,0 |
| t₉₀-t₁₀ (min) | 5,2 | 6,6 | 6,7 |
| Vulkanisation 30 min 160 °C Härte (Shore-A) | 67 | 74 | 75 |
| Zugfestigkeit (MPa) | 9,0 | 23,9 | 26,6 |
| Modul 300 % (Mpa) | 2,5 | (14,0)* | 14,2 |
| Reißdehnung (%) | 675 | 319 | 368 |
| Weiterreißfestigkeit (N/mm) | 16 | 14 | 17 |
| Compression Set 72 h 100 °C (%) | 66 | 53 | 49 |
| Abrieb (mm³) | 280 | 136 | 127 |
| Goodrich-Flexometer, Methode 1, ΔT nach 25 min (°C) | 53 | 36 | 37 |
| Fließen nach 25 min (%) | -10,5 | -1,1 | -1,8 |
| bl. Verformung (%) | 12,8 | 3,6 | 3,5 |

| | | | |
|---|---|---|---|
| * fehlerbehaftet, da Reißdehnung bei 319 % | | | |

Der Vergleich der Mischungen 017 und 018 zeigt, daß mit den erfindungsgemäßen Verstärkungsadditiven erhebliche Verbesserungen gegenüber dem Stand der Technik erzielt wurden. Während das Flexometer vergleichbare Werte zeigte, wiesen die Vulkameterdaten bei Einsatz der erfindungsgemäßen Präparationen auf eine höhere Verarbeitungssicherheit hin. Anhand der physikalisch-mechanischen Kennwerte, wie Abrieb und Compression Set, aber vor allem Weiterreißfestigkeit, Reißdehnung und Zugfestigkeit, werden die Vorteile der neue Präparationen deutlich sichtbar.

## Patentansprüche

1. Verstärkungsadditive, bestehend aus
a) 5 bis 70 Gew.-Teilen eines oder mehrerer oligomerer und/oder polymerer schwefelhaltiger Organoorganooxysilane der allgemeinen Formel 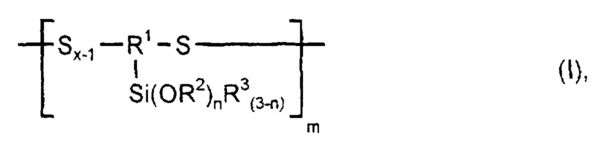 wobei
R¹ gesättigte und/oder ungesättigte, verzweigte und/oder unverzweigte, substituierte und/oder unsubstituierte, mindestens trivalente Kohlenwasserstoffe mit 2 bis 20 Kohlenstoffatomen, mit der Maßgabe darstellt, daß mindestens zwei Kohlenstoff-Schwefel-Bindungen enthalten sind,
R² und R³ unabhängig voneinander gesättigte und/oder ungesättigte, verzweigte und/oder unverzweigte, substituierte und/oder unsubstituierte Kohlenwasserstoffe mit 1 bis 20 Kohlenstoffatomen, Halogen, Hydroxy, Wasserstoff sowie Gruppierungen der allgemeinen Formel 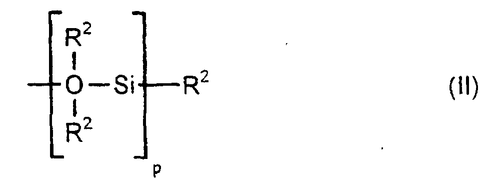 oder
―(OR²)_{q} ―R² (III),
wobei
R² die oben angegebene Bedeutung hat sowie n = 1 bis 3, m = 1 bis 1000, p = 1 bis 5, q = 1 bis 3 und x = 1 bis 8 betragen, bedeuten,
b) 30 bis 95 Gew.-Teilen eines oder mehrerer der verstärkenden halbaktiven, aktiven und/oder hochaktiven Ruße, wobei 50 bis 60 Gew.-% des Silananteils am Ruß nicht extrahierbar gebunden sind, und
c) gegebenenfalls weiteren Zusätzen.

2. Verstärkungsadditive nach Anspruch 1,
dadurch gekennzeichnet,
daß die oligomeren und/oder polymeren schwefelhaltigen Organoorganooxysilane Oligo/Poly-[4-(2-trialkoxysilylethyl)cyclohexan-1,2-diyl]bisoligosulfide der allgemeinen Formel 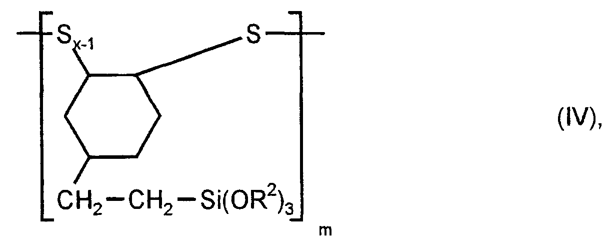 wobei R², m und x die oben angegebene Bedeutung besitzen, sind.

3. Verstärkungsadditive nach Anspruch 1,
dadurch gekennzeichnet,
daß bis zu 20 Gew.-Teile Organoorganooxysilane der allgemeinen Formel
R⁴-Si(OR²)ₙR³ ₍₃₋ₙ₎ (V),
wobei R², R³ und n die oben angegebene Bedeutung haben und R⁴ ungesättigte, verzweigte und/oder unverzweigte, substituierte und/oder unsubstituierte Kohlenwasserstoffe mit 2 bis 20 Kohlenstoffatomen und mit mindestens einer Doppelbindung olefinischen oder aromatischen Charakters darstellt, enthalten sind.

4. Verstärkungsadditive nach Anspruch 3,
dadurch gekennzeichnet,
daß als Verbindungen der allgemeinen Formel (V) 2-[(3-Cyclohexen-1-yl)ethyl]trialkoxysilane und/oder 2-(Phenyl-ethyl)-trialkoxysilane eingesetzt werden, wobei Alkoxy = OR² mit R² in der oben angegebenen Bedeutung ist.

5. Verstärkungsadditive nach Anspruch 1,
dadurch gekennzeichnet,
daß die schwefelhaltigen Organoorganooxysilane der allgemeinen Formel (I) kautschukübliche Zusätze und/oder freien Schwefel enthalten.

6. Verstärkungsadditive nach Anspruch 1,
bestehend aus
a) 40 bis 60 Gew.-Teilen der oligomeren und/oder polymeren schwefelhaltigen Organooxysilane der allgemeinen Formel (1) und
b) 40 bis 60 Gew.-Teilen der verstärkenden halbaktiven, aktiven und/oder hochaktiven Ruße.

7. Verfahren zur Herstellung der Verstärkungsadditive nach den Ansprüchen 1 bis 6,
dadurch gekennzeichnet,
daß
a) die oligomeren und/oder polymeren schwefelhaltigen Organoorganooxysilane der allgemeinen Formel (I),
b) die verstärkenden halbaktiven, aktiven und/oder hochaktiven Ruße sowie
c) gegebenenfalls weitere Zusätze
solange in einer diskontinuierlich oder kontinuierlich arbeitenden Mischeinrichtung bei Raumtemperatur eingemischt werden, bis das Organosilan auf dem Ruß adsorbiert ist und ein nicht klebendes Granulat erhalten wird.

8. Verwendung der Verstärkungsadditive nach den Ansprüchen 1 bis 7 in vulkanisierbaren Kautschukmischungen- und massen, Kunststoffmischungen und/oder Rußdispersionen.

9. Verwendung der Verstärkungsadditive nach Anspruch 8,
dadurch gekennzeichnet,
daß in den Kautschukmischungen und -massen sowie in den Kunststoffmischungen silicatische Füllstoffe enthalten sind.

10. Verwendung der Verstärkungsadditive nach Anspruch 9,
dadurch gekennzeichnet,
daß in den Kautschukmischungen und -massen sowie in den Kunststoffmischungen gefällte Kieselsäuren enthalten sind.

## Claims

1. Reinforcing additives consisting of
a) from 5 to 70 parts by weight of one or more oligomeric and/or polymeric sulfur-containing organoorganooxysilanes of the general formula 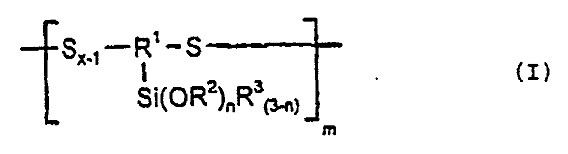 wherein
R¹ represents saturated and/or unsaturated, branched and/or unbranched, substituted and/or unsubstituted, at least trivalent hydrocarbons having from 2 to 20 carbon atoms, with the proviso that at least two carbon-sulfur bonds are present,
R² and R³ each independently of the other represents saturated and/or unsaturated, branched and/or unbranched, substituted and/or unsubstituted hydrocarbons having from 1 to 20 carbon atoms, halogen, hydroxy, hydrogen and also groupings of the general formula 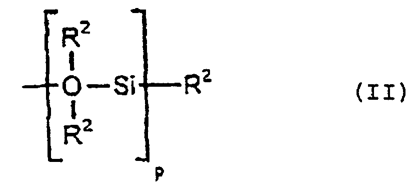 or
-(OR²)_{q}-R² (III)
wherein
R² is as defined above, and n = from 1 to 3, m = from 1 to 1000, p = from 1 to 5, q = from 1 to 3 and x = from 1 to 8,
b) from 30 to 95 parts by weight of one or more reinforcing semi-active, active and/or highly active carbon blacks, wherein from 50 to 60 wt.% of the silane content of the carbon black is bonded in a non-extractable manner, and
c) optionally further additives.

2. Reinforcing additives according to claim 1,
characterised in that
the oligomeric and/or polymeric sulfur-containing organoorganooxysilanes are oligo/poly-[4-(2-trialkoxysilylethyl)cyclohexane-1,2-diyl]bisoligosulfides of the general formula 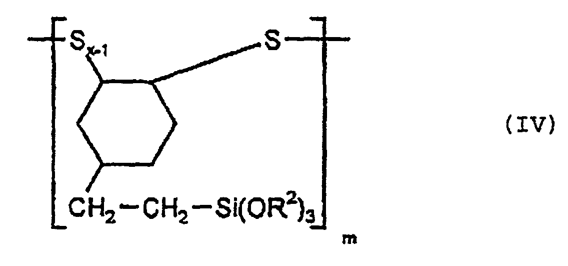 wherein R², m and x are as defined above.

3. Reinforcing additives according to claim 1,
characterised in that
there are present up to 20 parts by weight of organoorganooxysilanes of the general formula (V)
R⁴-Si(OR²)ₙR³ ₍₃₋ₙ₎ (V)
wherein R², R³ and n are as defined above and R⁴ represents unsaturated, branched and/or unbranched, substituted and/or unsubstituted hydrocarbons having from 2 to 20 carbon atoms and having at least one double bond of olefinic or aromatic nature.

4. Reinforcing additives according to claim 3,
characterised in that
there are used as compounds of the general formula (V) 2-[(3-cyclohexen-1-yl)ethyl]trialkoxysilanes and/or 2-(phenyl-ethyl)-trialkoxysilanes, wherein alkoxy = OR² in which R² is as defined above.

5. Reinforcing additives according to claim 1,
characterised in that
the sulfur-containing organoorganooxysilanes of the general formula (I) contain additives conventionally employed in rubbers and/or free sulfur.

6. Reinforcing additives according to claim 1,
consisting of
a) from 40 to 60 parts by weight of the oligomeric and/or polymeric sulfur-containing organooxysilanes of the general formula (I) and
b) from 40 to 60 parts by weight of the reinforcing semi-active, active and/or highly active carbon blacks.

7. Process for the preparation of reinforcing additives according to claims 1 to 6,
characterised in that
a) the oligomeric and/or polymeric sulfur-containing organoorganooxysilanes of the general formula (I),
b) the reinforcing semi-active, active and/or highly active carbon blacks, and
c) optionally further additives
are mixed at room temperature in a mixing device that operates discontinuously or continuously until the organosilane has been adsorbed onto the carbon black and non-tacky granules are obtained.

8. Use of the reinforcing additives according to claims 1 to 7 in vulcanisable rubber mixtures and compositions, plastics mixtures and/or carbon black dispersions.

9. Use of the reinforcing additives according to claim 8,
characterised in that
silicate-like fillers are present in the rubber mixtures and compositions and in the plastics mixtures.

10. Use of the reinforcing additives according to claim 9,
characterised in that
precipitated silicas are present in the rubber mixtures and compositions and in the plastics mixtures.

## Revendications

1. Additifs renforçateurs, constitués
a) de 5 à 70 parties en poids d'un ou de plusieurs organoorganooxysilanes oligomères et/ou polymères contenant du soufre de formule générale 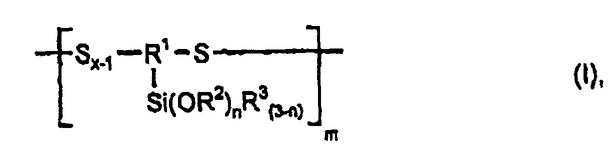 où
R¹ représente des hydrocarbures saturés et/ou insaturés, ramifiés et/ou linéaires, substitués et/ou non substitués, au moins trivalents, comprenant 2 à 20 atomes de carbone, sous réserve qu'au moins deux liaisons carbone-soufre soient contenues,
R² et R³ représentent, indépendamment l'un de l'autre, des hydrocarbures saturés et/ou insaturés, ramifiés et/ou linéaires, substitués et/ou non substitués, comprenant 1 à 20 atomes de carbone, un atome d'halogène, un groupe hydroxy, un atome d'hydrogène ainsi que des groupements de formule générale 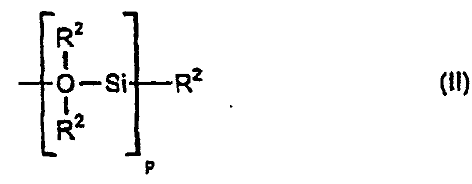 ou
―(OR²)_{q}―R² (III),
où
R² a la signification susmentionnée et n = 1 à 3, m = 1 à 1000, p = 1 à 5, q = 1 à 3, et x = 1 à 8,
b) de 30 à 95 parties en poids d'une ou de plusieurs des suies renforçatrices semi-actives, actives et/ou très actives, 50 à 60 % en poids de la proportion de silane étant liés sur la suie de manière ne pas pouvoir être extraits, et
c) le cas échéant d'autres additifs.

2. Additifs renforçateurs selon 1a revendication 1, caractérisés en ce que les organoorganooxysilanes oligomères et/ou polymères contenant du soufre sont des oligo-[4-(2-trialkoxysilyléthyl)-cyclohexane-1,2-diyl]-bisoligosulfures ou des poly-[4-(2-trialkoxysilyléthyl)-cyclohexane-1,2-diyl]-bisoligosulfures de formule générale 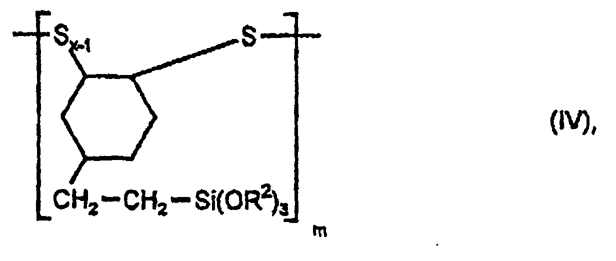 où R², m et x ont la signification susmentionnée.

3. Additifs renforçateurs selon la revendication 1, caractérisés en ce qu'ils contiennent jusqu'à 20 parties en poids d'organoorganooxysilanes de formule générale
R⁴-Si(OR²)ₙR³ (V)
où R², R³ et n ont la signification susmentionnée et R⁴ représente des hydrocarbures insaturés, ramifiés et/ou linéaires, substitués et/ou non substitués, comprenant 2 à 20 atomes de carbone et comprenant au moins une double liaison à caractère oléfinique ou aromatique.

4. Additifs renforçateurs selon la revendication 3, caractérisés en ce qu'on utilise comme composés de formule générale (V) des 2-[(3-cyclohexèn-1-yl)-éthyl]-trialkoxysilanes et/ou des 2-(phényl-éthyl)-trialkoxysilanes, alkoxy étant égal à OR², avec R² ayant la signification susmentionnée.

5. Additifs renforçateurs selon la revendication 1, caractérisés en ce que les organoorganooxysilanes de formule générale (I) contiennent des additifs usuels du caoutchouc et/ou du soufre libre.

6. Additifs renforçateurs selon la revendication 1, constitués
a) de 40 à 60 parties en poids des organooxysilanes oligomères et/ou polymères contenant du soufre de formule I et
b) 40 à 60 parties en poids des suies renforçatrices semi-actives, actives et/ou très actives.

7. Procédé pour la préparation d'additifs renforçateurs selon les revendications 1 à 6, caractérisé en ce qu'on mélange
a) les organoorganooxysilanes oligomères et/ou polymères contenant du soufre de formule générale I,
b) les suies renforçatices semi-actives, actives et/ou très actives ainsi que
c) le cas échéant d'autres additifs
dans un dispositif de mélange fonctionnant de manière disoontinue ou continue à température ambiante jusqu'à ce que l'organosilane soit adsorbé sur la suie et qu'on obtienne un granulat non collant.

8. Utilisation des additifs renforçateurs selon les revendications 1 à 7 dans des mélanges caoutchouteux et des masses caoutchouteuses vulcanisables, des mélanges synthétiques et/ou des dispersions de suie.

9. Utilisation des additifs renforçateurs selon la revendication 8, caractérisée en ce que des charges silioatées sont contenues dans les mélanges caoutchouteux et les masses caoutchouteuses ainsi que dans les mélanges de matières synthétiques.

10. Utilisation des additifs renforçateurs selon la revendication 9, caractérisée en ce que des silices précipitées sont contenues dans les mélanges caoutchouteux et les masses caoutchouteuses ainsi que dans les mélanges de matières synthétiques.
